# EUROPEAN PATENT APPLICATION

(11) **EP 2 447 524 A1**
(43) Date of publication of application: **02.05.2012**
(21) Application number: 11185445.1
(22) Date of filing: 17.10.2011
(51) Int. Cl.: F03D 1/06, F03D 11/00

(54) **Wind turbine pitch assembly enclosure system**

(30) Priority: 29.10.2010 US 916063
(71) Applicant: General Electric Company, Schenectady, NY 12345 (US)
(72) Inventor: Moore, Bradley Graham, Greenville, SC South Carolina 29615 (US)
(74) Representative: Bedford, Grant Richard

(57) **Abstract**

A system for enclosing a portion of a wind turbine 100 with an enclosure system and a method of enclosing a wind turbine with the system are described. An inner seal plate 170 is positioned in an inner interface area 152 between a hub 110 of the wind turbine a pitch assembly 130. An opening 172 is formed in the inner seal plate 170 and is covered with a first access cover 174 when in a closed position. An outer seal plate 180 is positioned in an outer interface area between a pitch assembly 130 and a rotor blade 128. An opening is formed in the outer seal plate 180 and is covered with a second access cover 184 when in a closed position. The access covers 174, 184 restricts access to the respective openings formed in the seal plates 170, 180 when in the closed position.

## Description

The subject matter described herein relates generally to wind turbines and, more particularly, to a method and apparatus for controlling access to a portion of a wind turbine.

Known wind turbines convert the kinetic energy of wind into electrical energy. Wind turbines include one or more blades coupled to a rotatable hub that rotate when oncoming wind strikes the blades. The flow of wind over the wind turbine blades generates lift, induces rotation, and provides torque to generate power. The pitch of the blades is controlled by a pitch assembly which couples the blades to a rotatable hub.

At least some known wind turbines have a rotatable hub that is open to the surrounding environment. This open-air design facilitates cooling of components inside the hub and/or inside the nacelle of the wind turbine. However, this design of the hub also results in the pitch assembly being open to the harsh environmental and atmospheric conditions and contaminants (e.g., particulate matter or corrosive elements) contained therein as well. This exposure of the pitch assembly to the surrounding atmosphere may result in increased wear of the pitch assembly due to the contaminants present in the atmosphere.

In one aspect according to the present invention, a system for enclosing a pitch assembly in a wind turbine is provided. The pitch assembly is coupled to a rotatable hub at an inner interface area of the pitch assembly. The system comprises a seal plate positioned in the inner interface area for restricting access to the pitch assembly from the rotatable hub. The seal plate is configured for enclosing the pitch assembly from the inner interface area.

In another aspect, a system for enclosing a pitch assembly in a wind turbine is provided. The pitch assembly is coupled to a rotatable hub at an inner interface area of the pitch assembly. The system comprises an inner seal plate positioned in the inner interface area for restricting access to the pitch assembly from the rotatable hub. The inner seal plate defines a first opening. A first access cover is configured to cover the first opening with the first access cover in a closed position. An outer interface area is defined by an area where a rotor blade is coupled to the pitch assembly. An outer seal plate is positioned in the outer interface area for restricting access to the pitch assembly from the rotor blade.

In another aspect, a method enclosing a pitch assembly in a wind turbine is provided. The pitch assembly is coupled at an inner interface area to a rotatable hub and the pitch assembly coupled at an outer interface area to a rotor blade. The method comprises positioning an inner seal plate in the inner interface area of the pitch assembly. The inner seal plate restricts access to the pitch assembly from the rotatable hub.

Various aspects and embodiments of the present invention will now be described in connection with the accompanying drawings, in which:
Fig. 1 is a side perspective view of an exemplary wind turbine.
Fig. 2 is a partial sectional view of an exemplary nacelle suitable for use with the wind turbine shown in Fig. 1.
Fig. 3 is a partial cross-sectional view of an exemplary system for enclosing a pitch assembly taken along the sectional line 3-3 shown in Fig. 2.
Fig. 4 is an exploded partial cross-sectional view of another exemplary system for enclosing a pitch assembly in the wind turbine shown in Fig. 1.
Fig. 5 is a flowchart of an exemplary method for retrofitting the wind turbine shown in Fig. 1 with an exemplary system for enclosing a pitch assembly of the wind turbine.

Various of the embodiments set forth herein describe enclosure systems used to enclose a pitch assembly in a wind turbine. In these systems, the pitch assembly is enclosed from the harsh outside environmental and atmospheric conditions, while the other components in the rotatable hub remain open to the outside atmosphere. The pitch assembly is thus protected from the outside atmosphere and the contaminants contained therein (e.g., particulates and corrosive elements).

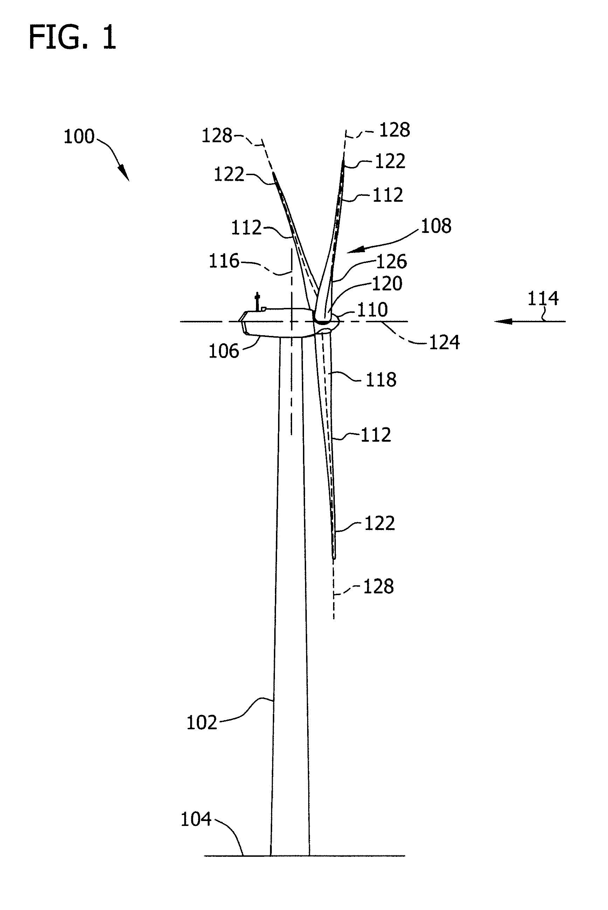

Fig. 1 is a schematic view of an exemplary wind turbine 100. In the exemplary embodiment, wind turbine 100 is a horizontal-axis wind turbine. Alternatively, wind turbine 100 may be a vertical-axis wind turbine. In the exemplary embodiment, wind turbine 100 includes a tower 102 extending from and coupled to a supporting surface 104. Tower 102 may be coupled to surface 104 with anchor bolts or via a foundation mounting piece (neither shown), for example. A nacelle 106 is coupled to tower 102, and a rotor 108 is coupled to nacelle 106. Rotor 108 includes a rotatable hub 110 and a plurality of rotor blades 112 coupled to hub 110. In the exemplary embodiment, rotor 108 includes three rotor blades 112. Alternatively, rotor 108 may have any suitable number of rotor blades 112 that enables wind turbine 100 to function as described herein. Tower 102 may have any suitable height and/or construction that enables wind turbine 100 to function as described herein.

Rotor blades 112 are spaced about hub 110 to facilitate rotating rotor 108, thereby transferring kinetic energy from wind 114 into usable mechanical energy, and subsequently, electrical energy. Rotor 108 and nacelle 106 are rotated about tower 102 on a yaw axis 116 to control a perspective of rotor blades 112 with respect to a direction of wind 114. Rotor blades 112 are mated to hub 110 by coupling a rotor blade root portion 118 to hub 110 at a plurality of load transfer regions 120. Load transfer regions 120 each have a hub load transfer region and a rotor blade load transfer region (both not shown in Fig. 1). Loads induced to rotor blades 112 are transferred to hub 110 via load transfer regions 120. Each rotor blade 112 also includes a rotor blade tip portion 122.

In the exemplary embodiment, rotor blades 112 have a length of between approximately 30 meters (m) (99 feet (ft)) and approximately 120 m (394 ft). Alternatively, rotor blades 112 may have any suitable length that enables wind turbine 100 to function as described herein. For example, rotor blades 112 may have a suitable length less than 30 m or greater than 120 m. As wind 114 contacts rotor blade 112, lift forces are induced to rotor blade I 12 and rotation of rotor 108 about an axis of rotation 124 is induced as rotor blade tip portion 122 is accelerated.

A pitch angle (not shown) of rotor blades 112, i.e., an angle that determines the perspective of rotor blade 112 with respect to the direction of wind 114, may be changed by a pitch assembly (not shown in Fig. 1). More specifically, increasing a pitch angle of rotor blade 112 decreases an amount of rotor blade surface area 126 exposed to wind 114 and, conversely, decreasing a pitch angle of rotor blade 112 increases an amount of rotor blade surface area 126 exposed to wind 114. The pitch angles of rotor blades 112 are adjusted about a pitch axis 128 at each rotor blade 112. In the exemplary embodiment, the pitch angles of rotor blades 112 are controlled individually.

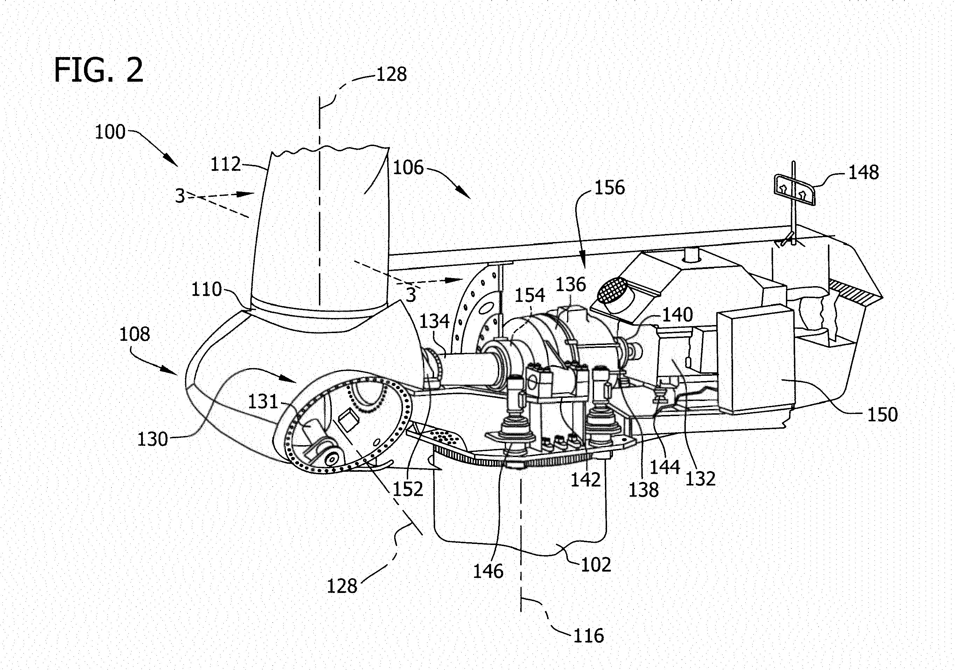

Fig. 2 is a partial sectional view of nacelle 106 of exemplary wind turbine 100 (shown in Fig. 1). Various components of wind turbine 100 are housed in nacelle 106. In the exemplary embodiment, hub 110 includes three pitch assemblies 130. Each pitch assembly 130 is coupled to an associated rotor blade 112 (shown in Fig. 1), and modulates a pitch of an associated rotor blade 112 about pitch axis 128. Only one of three pitch assemblies 130 is shown in Fig. 2. In the exemplary embodiment, each pitch assembly 130 includes at least one pitch drive motor 131.

As shown in Fig. 2, rotor 108 is rotatably coupled to an electric generator 132 positioned within nacelle 106 via a rotor shaft 134 (sometimes referred to as either a main shaft or a low speed shaft), a gearbox 136, a high speed shaft 138, and a coupling 140. Rotation of rotor shaft 134 rotatably drives gearbox 136 that subsequently drives high speed shaft 138. High speed shaft 138 rotatably drives generator 132 via coupling 140 and rotation of high speed shaft 138 facilitates production of electrical power by generator 132. Gearbox 136 is supported by a support 142 and generator 132 is supported by a support 144. In the exemplary embodiment, gearbox 136 utilizes a dual path geometry to drive high speed shaft 138. Alternatively, rotor shaft 134 is coupled directly to generator 132 via coupling 140.

Nacelle 106 also includes a yaw drive mechanism 146 that rotates nacelle 106 and rotor 108 about yaw axis 116 to control the perspective of rotor blades 112 with respect to the direction of wind 114. Nacelle 106 also includes at least one meteorological mast 148 that includes a wind vane and anemometer (neither shown in Fig. 2). In one embodiment, meteorological mast 148 provides information, including wind direction and/or wind speed, to a turbine control system 150. Turbine control system 150 includes one or more controllers or other processors configured to execute control algorithms. As used herein, the term "processor" includes any programmable system including systems and microcontrollers, reduced instruction set circuits (RISC), application specific integrated circuits (ASIC), programmable logic circuits (PLC), and any other circuit capable of executing the functions described herein. The above examples are exemplary only, and thus are not intended to limit in any way the definition and/or meaning of the term processor. Moreover, turbine control system 150 may execute a SCADA (Supervisory, Control and Data Acquisition) program.

Pitch assembly 130 is operatively coupled to turbine control system 150. In the exemplary embodiment, nacelle 106 also includes forward support bearing 152 and aft support bearing 154. Forward support bearing 152 and aft support bearing 154 facilitate radial support and alignment of rotor shaft 134. Forward support bearing 152 is coupled to rotor shaft 134 near hub 110. Aft support bearing 154 is positioned on rotor shaft 134 near gearbox 136 and/or generator 132. Nacelle 106 may include any number of support bearings that enable wind turbine 100 to function as disclosed herein. Rotor shaft 134, generator 132, gearbox 136, high speed shaft 138, coupling 140, and any associated fastening, support, and/or securing device including, but not limited to, support 142, support 144, forward support bearing 152, and aft support bearing 154, are sometimes referred to as a drive train 156.

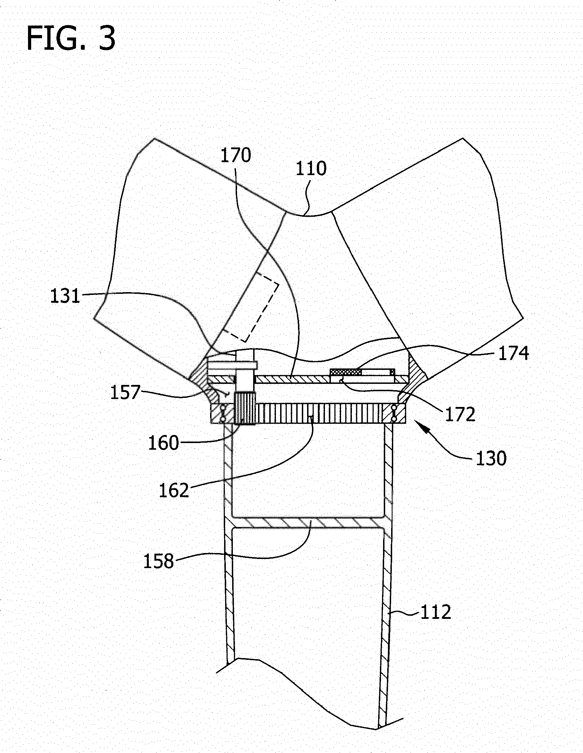

Fig. 3 illustrates a partial cross-sectional view of an exemplary system for enclosing pitch assembly 130 in the wind turbine 100 shown in Fig. 1. The cross-sectional view of Fig. 3 is taken along the sectional line 3-3 line shown in Fig. 2. While only one pitch assembly 130 and corresponding rotor blade 112 is shown in Fig. 3, the system described herein may be used with any number of rotor blades 112 and pitch assemblies 130 shown in Figs. 1 and 2.

Pitch assembly 130 includes a pitch drive pinion 160 coupled to pitch drive motor 131 which is in turn coupled to hub 110. Pitch drive pinion 160 is in registry with a pitch ring gear 162 that is in turn coupled to rotor blade 112. Accordingly, rotation of pitch drive motor 131 results in rotation of rotor blade 112.

An inner interface area 157 (shown in Fig. 2) is disposed in hub 110 radially inward from pitch ring gear 162. An inner seal plate 170 is disposed in inner interface area 157 and may be integrally formed with hub 110 (i.e., from the casting) or may be positioned in inner interface area 157 and secured therein by any suitable fastening system (e.g., mechanical fasteners and/or welding). Inner seal plate 170 is formed from any suitable material, such as, but not limited to steel, alloys thereof, plastics, or composite materials.

A first opening 172 is formed in inner seal plate 170. In the exemplary embodiment, first opening 172 is sized and shaped such that a person can travel therethrough, although in other embodiments first opening 172 is sized differently. For example, first opening 172 may be sized such that a piece of equipment (e.g., a robot) and/or other tool may pass therethrough. A blade root closeout 158 is positioned radially outward from pitch assembly 130 in rotor blade 112 and prevents objects from passing into rotor blade 112. Blade root closeout 158 may have an opening or other aperture formed therein in some embodiments to facilitate removal of water or other materials from an interior portion of rotor blade 112.

A first access cover 174 is configured in the exemplary embodiment to cover first opening 172 in inner seal plate 170 when first access cover 174 is in a closed position. Additional access covers and corresponding openings may be provided in inner seal plate 170 without departing from the scope of the embodiments. These additional access covers and openings may serve other purposes, as providing access for tightening or checking the torque of bolts used to secure rotor blades 112.

First access cover 174 may thus have suitable overall dimensions the same as or slightly larger than those of first opening 172. In this closed position, first access cover 174 restricts access to first opening 172 such that particulates larger than a predetermined size are prevented from passing from inner interface area 157 to pitch assembly 130. In the exemplary embodiment, the first access cover 174 restricts access to first opening 172 such an ingress protection (IP) rating of 56 is provided where dust is unable to pass therethrough and protection is provided against temporary flooding of water. In an open position, first access cover 174 does not restrict access to first opening 172, and as such, objects and/or persons may pass therethrough.

A closure mechanism (not shown) is used in the exemplary embodiment to secure first access cover 174 in the closed position. The closure mechanism may include mechanical fasteners (e.g., nuts and/or bolts), hinges, latches, or any other suitable components. The closure mechanism may be removed or unfastened in order to move the first access cover 174 to the open position. A sealing member (not shown) may also be positioned between first access cover 174 and inner seal plate 170. The sealing member may be a gasket or other suitable device that restricts and/or eliminates the flow of materials between inner interface area 157 and pitch assembly 130 when first access cover 174 is in the closed position. Various other fasteners may be used to couple the components of the system together as well.

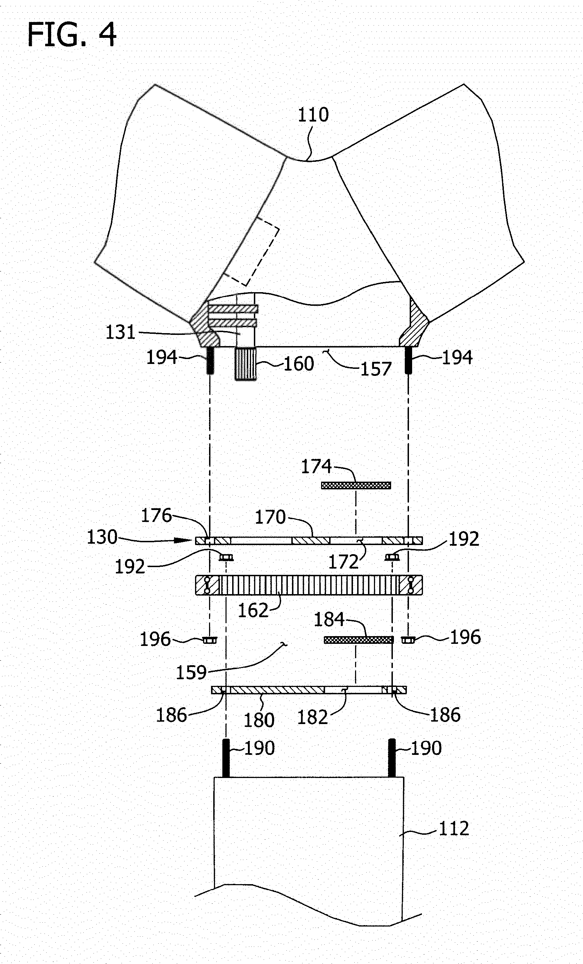

Fig. 4 illustrates a partial cross-sectional view of an exemplary system for enclosing pitch assembly 130 in the wind turbine 100 shown in Fig. 1. The cross-sectional view of Fig. 4 is taken along the sectional line 3-3 of Fig. 2. While only one pitch assembly 130 and corresponding rotor blade 112 is shown in Fig. 4, the system described herein may be used with any number of rotor blades 112 and pitch assemblies 130 shown in Figs. 1 and 2.

The embodiment of Fig. 4 is similar to the embodiment of Fig. 3, and as such, like reference numerals are used to refer to like components. A primary difference between the embodiments, however, is that the embodiment of Fig. 4 uses two seal plates disposed on opposite sides of pitch assembly 130. Moreover, Fig. 4 is an exploded view showing the components of the embodiment in an unassembled configuration. Moreover, the arrangement of the components shown in Fig. 4 is exemplary in nature and as such may be modified without departing from the scope of the embodiments.

Inner seal plate 170 may be integrally constructed with the bearing outer race and is disposed in inner interface area 157. Inner seal plate 170 may also be integrally formed with hub 110 (i.e., from the casting) or may be positioned in inner interface area 157 and secured therein by any suitable fastening system (e.g., mechanical fasteners and/or welding). An outer seal plate 180 is disposed in an outer interface area 159 where blade 112 is coupled to pitch assembly 130. Outer seal plate 180 may be formed from the same materials as inner seal plate 170 described above, or it may be formed from different materials.

First opening 172 is formed in inner seal plate 170 while a second opening 182 is formed in outer seal plate 180. Access covers 174, 184 have suitable overall dimensions the same as or slightly larger than their respective openings 172, 182. Access covers 174, 184 may also be formed from any suitable material, whether rigid, flexible, and/or porous. Openings 172, 182 are sized and shaped such that a person can travel therethrough, although in other embodiments openings 172, 182 are sized differently. For example, openings 172, 182 may be sized such that a piece of equipment (e.g., a robot) and/or other tool may pass therethrough. Moreover, openings 172, 182 may be the same size or they may each be differently sized and additional openings and corresponding access covers may be provided in seal plates 170, 180. Seal plates 170, 180 may also increase the structural rigidity of hub 110 and bearings contained therein and thus decrease the cost of manufacturing hub 110 and the bearings contained therein.

First access cover 174 is used in the exemplary embodiment to cover first opening 172 in inner seal plate 170 when first access cover 174 is in a closed position. Likewise, second access cover 184 is used to cover second opening 182 in outer seal plate 180 when second access cover 184 is in a closed position. In some embodiment, access covers 174, 184 may be the same size, while in other embodiments each of access cover 174, 184 may be differently sized.

In the closed position, access cover 174 restricts access to opening 172 such that particulates larger than a predetermined size are prevented from passing from inner interface area 157 to pitch assembly 130 and vice versa. Access cover 184 likewise restricts access to opening 182 such that particulates larger than the predetermined size are prevented from passing from pitch assembly 130 to an interior of rotor blade 112 and vice versa. In the exemplary embodiment, the first access cover 174 restricts access to first opening 172 such an ingress protection (IP) rating of 56 is provided where dust is unable to pass therethrough and protection is provided against temporary flooding of water. Moreover, in some embodiments access covers 174, 184, when in the closed position, may significantly restrict or altogether prevent the flow of gases therethrough.

In an open position, first access cover 174 does not restrict access to first opening 172, and as such, objects and/or persons may pass therethrough. Second access cover 184 likewise does not restrict access to second opening 182 in its open position, and as such, objects and/or persons may pass therethrough.

A closure mechanism(s) (not shown) is used in the exemplary embodiment to secure access covers 174, 184 in the closed position. The closure mechanism(s) may include mechanical fasteners (e.g., nuts and/or bolts), hinges, latches, or any other suitable components. The closure mechanism(s) may be removed or unfastened in order to move the access covers 174, 184 to the open position. Sealing member(s) (not shown) may also be positioned between access covers 174, 184 and respective seal plates 170, 180 when access covers 174, 184 are in the closed position. The sealing member may be a gasket or other suitable device that restricts and/or eliminates the flow of materials between interface area 156 and pitch assembly 130, and between pitch assembly 130 and the interior of rotor blade 112.

In the embodiment of Fig. 4 multiple mechanical fasteners are used to couple the various components together. For example, blade bolts 190 are used along with blade nuts 192 in the exemplary embodiment to secure rotor blade 112 and outer seal plate 180 to pitch assembly 130. Blade bolts 190 pass through corresponding bolt openings 186 in outer seal plate 180 and openings (not shown) in pitch assembly 130. Hub bolts 194 are used along with hub nuts 196 in the exemplary embodiment to secure inner seal plate 170 and pitch assembly 130 to hub 110. Hub bolt 194 pass through corresponding bolt openings 176 in inner seal plate 170 and openings (not shown) in pitch assembly 130. In other embodiments, different types of fasteners or fastening systems may be used to couple the various components together.

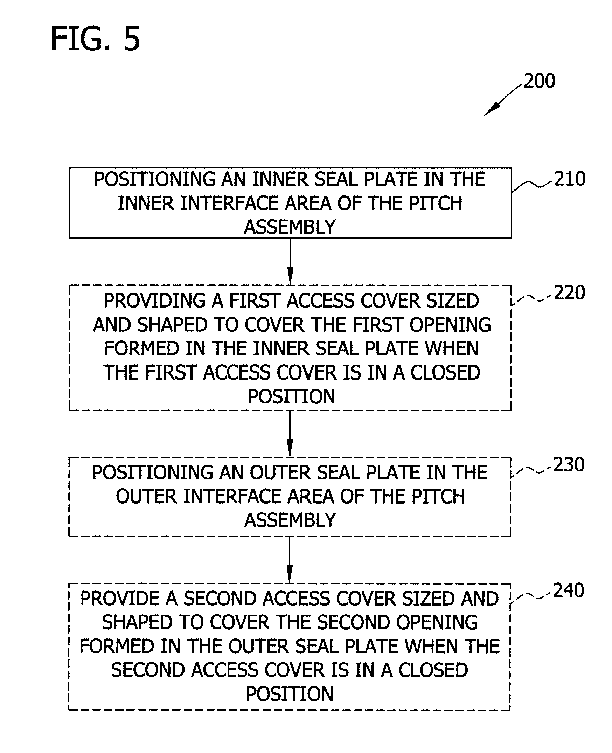

Fig. 5 illustrates a flowchart of an exemplary method 200 for enclosing a pitch assembly in a wind turbine (shown in Fig. 1). Method 200 may be used to retrofit existing wind turbines or instead may be used during the initial construction of wind turbines before they are put into service.

As described above, wind turbine 100 includes pitch assembly 130 coupled at inner interface area 157 to hub 110 and pitch assembly 130 coupled at outer interface area 159 to rotor blades 112. Method 200 begins with positioning 210 inner seal plate 170 in inner interface area 157 of pitch assembly 130. Inner seal plate 170 restricts access to pitch assembly 130 from hub 110. Inner seal plate 170 also has first opening 172 formed therein. First opening 172 may be formed in inner seal plate 170 before or after inner seal plate 170 is positioned in inner interface area 157. Inner seal plate 170 may be positioned within inner interface area 157 and coupled in place with the aid of suitable mechanical fasteners (e.g., bolts, nuts, etc.), or other fastening systems (e.g., welding, brazing, adhesive bonding, etc.) may be used to couple inner seal plate 170 in place.

Method 200 continues with providing 220 first access cover 174 sized and shaped to cover first opening 172 formed in inner seal plate 170 when first access cover 174 is in the closed position. Outer seal plate 180 is then positioned 230 in outer interface area 159 of pitch assembly 130. Outer seal plate 180 restricts access to pitch assembly from rotor blade 112 and has second opening 182 formed therein. Second opening 182 may be formed in outer seal plate 180 before or after outer seal plate 180 is positioned in outer interface area 159. Outer seal plate 180 may be positioned within outer interface area 159 and coupled in place with the aid of suitable mechanical fasteners (e.g., bolts, nuts, etc.), or other fastening systems (e.g., welding, brazing, adhesive bonding, etc.) may be used to couple outer seal plate 180 in place.

Second access cover 184 may then be provided 240 which is sized and shaped to cover second opening 182 formed in outer seal plate 180 when second access cover 184 is in the closed position. Various closure mechanism may then be provided for securing first access cover 174 and/or second access cover 184 in respective closed positions.

The examples used herein are illustrative only, and are not meant to be limited to the elements of those examples. The above-described embodiments provide an efficient and cost-effective system for restricting access to a pitch assembly in a wind turbine. Methods are also provided in the above-described embodiments for retrofitting a wind turbine to include systems for restricting access to the pitch assembly in the wind turbine. The systems and methods permit protection of the pitch assembly from the outside atmosphere and contaminants contained therein. Accordingly, the hub of the wind turbine and the components contained therein may be exposed and cooled by the atmosphere, while the pitch assembly may be isolated from the atmosphere.

Exemplary embodiments of a wind turbine, a system for restricting access to the pitch assembly, and a method for retrofitting a wind turbine with such a system are described above in detail. The method, wind turbine, and system are not limited to the specific embodiments described herein, but rather, components of the turbine and/or system and/or steps of the method may be utilized independently and separately from other components and/or steps described herein. For example, the system may also be used in combination with other systems and methods, and is not limited to practice with only the wind turbine and method as described herein. Rather, the exemplary embodiment can be implemented and utilized in connection with many other wind turbine applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system for enclosing a pitch assembly in a wind turbine, the pitch assembly coupled to a rotatable hub at an inner interface area of the pitch assembly, said system comprising:
   a seal plate positioned in the inner interface area for restricting access to the pitch assembly from the rotatable hub, said seal plate configured for enclosing the pitch assembly from the inner interface area.
2. The system of clause 1, wherein the seal plate has an opening formed therein.
3. The system of any preceding clause, further comprising an access cover configured to obstruct access to the opening formed in said seal plate when said access cover is in a closed position.
4. The system of any preceding clause, further comprising a closure mechanism for securing said access cover to said seal plate.
5. The system of any preceding clause, further comprising an outer seal plate position in an outer interface area where a rotor blade is coupled to the pitch assembly, said outer seal plate configured for enclosing the pitch assembly from the rotor blade.
6. The system of any preceding clause, further comprising a sealing member disposed between said seal plate and said access cover.
7. The system of any preceding clause, wherein said seal plate and said access cover are configured such that when said access cover is in the closed position said seal plate and said access cover prevent particulates sized larger than a predetermined size and water from passing from the rotatable hub to the pitch assembly.
8. A system for enclosing a pitch assembly in a wind turbine, the pitch assembly coupled to a rotatable hub at an inner interface area of the pitch assembly; said system comprising:
   an inner seal plate positioned in the inner interface area for restricting access to the pitch assembly from the rotatable hub, said inner seal plate defining a first opening;
   a first access cover configured to cover the first opening with said first access cover in a closed position;
   an outer interface area defined by an area where a rotor blade is coupled to the pitch assembly; and,
   an outer seal plate positioned in the outer interface area for restricting access to the pitch assembly from the rotor blade.
9. The system of any preceding clause, further comprising a second access cover configured to cover the second opening in said outer seal plate when in a closed position and to permit access to the second opening when in an opened position.
10. The system of any preceding clause, wherein the first opening formed in said inner seal plate is sized such that a person can pass therethrough.
11. The system of any preceding clause, further comprising at least one closure mechanism for securing one of said first access cover and said second access cover in the closed position.
12. The system of any preceding clause, wherein said closure mechanism includes one or more hinges and one or more latch mechanisms.
13. The system of any preceding clause, further comprising a first gasket, said first gasket disposed between said first seal plate and said first access cover when said first access cover is in the closed position.
14. The system of any preceding clause, further comprising a second gasket, said second gasket disposed between said second seal plate and said second access cover when said second access cover is in the closed position.
15. A method for enclosing a pitch assembly in a wind turbine, the pitch assembly coupled at an inner interface area to a rotatable hub, the pitch assembly coupled at an outer interface area to a rotor blade, said method comprising:
   positioning an inner seal plate in the inner interface area of the pitch assembly, the inner seal plate restricting access to the pitch assembly from the rotatable hub.
16. The method of any preceding clause, wherein the inner seal plate has a first opening formed therein.
17. The method of any preceding clause, further comprising providing a first access cover configured to cover the first opening formed in the inner seal plate when the first access cover is in a closed position.
18. The method of any preceding clause, further comprising positioning an outer seal plate in the outer interface area of the pitch assembly, the outer seal plate restricting access to the pitch assembly from the rotor blade, the outer seal plate having a second opening formed therein
19. The method of any preceding clause, further comprising providing a second access cover configured to cover the second opening in the outer seal plate when the second access cover is in a closed position.
20. The method of any preceding clause, further comprising securing the first access cover in the closed position to cover the first opening formed in the inner seal plate.

## Claims

1. A system for enclosing a pitch assembly (130) in a wind turbine (100), the pitch assembly (130) coupled to a rotatable hub (110) at an inner interface area (157) of the pitch assembly (130), said system comprising:
a seal plate (170) positioned in the inner interface area (157) for restricting access to the pitch assembly (130) from the rotatable hub (110), said seal plate (170) configured for enclosing the pitch assembly (130) from the inner interface area (157).

2. The system of claim 1, wherein the seal plate (170) has an opening (172) formed therein.

3. The system of claim 2 further comprising an access cover (174) configured to obstruct access to the opening (172) formed in said seal plate (170) when said access cover is in a closed position.

4. The system of claim 3, further comprising a closure mechanism for securing said access cover (174) to said seal plate (170).

5. The system of any preceding claim, further comprising an outer seal plate (180) position in an outer interface area where a rotor blade (128) is coupled to the pitch assembly (130), said outer seal plate (180) configured for enclosing the pitch assembly (130) from the rotor blade (128).

6. The system of any preceding claim, further comprising a sealing member disposed between said seal plate (170) and said access cover (174).

7. The system of any preceding claim, wherein said seal plate (170) and said access cover (174) are configured such that when said access cover (174) is in the closed position said seal plate and said access cover prevent particulates sized larger than a predetermined size and water from passing from the rotatable hub (110) to the pitch assembly (130).

8. A system for enclosing a pitch assembly (130) in a wind turbine (110), the pitch assembly coupled to a rotatable hub at an inner interface area of the pitch assembly; said system comprising:
an inner seal plate (170) positioned in the inner interface area for restricting access to the pitch assembly from the rotatable hub, said inner seal plate defining a first opening;
a first access cover (174) configured to cover the first opening with said first access cover in a closed position;
an outer interface area (157) defined by an area where a rotor blade is coupled to the pitch assembly; and
an outer seal plate (180) positioned in the outer interface area for restricting access to the pitch assembly from the rotor blade.

9. The system of claim 8, further comprising a second access cover (184) configured to cover the second opening in said outer seal plate (180) when in a closed position and to permit access to the second opening when in an opened position.

10. The system of claim 8 or claim 9, wherein the first opening (172) formed in said inner seal plate is sized such that a person can pass therethrough.

11. The system of any of claims 8 to 10, further comprising at least one closure mechanism for securing one of said first access cover (174) and said second access cover (184) in the closed position.

12. The system of claim 11, wherein said closure mechanism includes one or more hinges and one or more latch mechanisms.

13. The system of any of claims 8 to 12, further comprising a first gasket, said first gasket disposed between said first seal plate (170) and said first access cover (174) when said first access cover (174) is in the closed position.

14. The system of any of claims 8 to 13, further comprising a second gasket, said second gasket disposed between said second seal plate (180) and said second access cover (184) when said second access cover (184) is in the closed position.

15. A method for enclosing a pitch assembly (130) in a wind turbine (100), the pitch assembly coupled at an inner interface area (157) to a rotatable hub (110), the pitch assembly (130) coupled at an outer interface area to a rotor blade (128), said method comprising:
positioning an inner seal plate (170) in the inner interface area (157) of the pitch assembly (130), the inner seal plate (170) restricting access to the pitch assembly (130) from the rotatable hub (110).
